# EUROPÄISCHE PATENTSCHRIFT

(11) **EP 0 312 877 B1**
(45) Veröffentlichungstag und Bekanntmachung des Hinweises auf die Patenterteilung: **21.04.1993**
(21) Anmeldenummer: 88116806.6
(22) Anmeldetag: 11.10.1988
(51) Int. Cl.: B31B 3/74, B65B 19/00, B65B 41/00, B65H 35/10

(54) **Verfahren und Vorrichtung zum Herstellen und Fördern von Packungs-Zuschnitten**
Method and device for the production of package cuts
Procédé et dispositif pour fabriquer et convoyer des coupes pour paquets

(30) Priorität: 22.10.1987 DE 3735675
(43) Veröffentlichungstag der Anmeldung: 26.04.1989
(60) Teilanmeldung: 92113309.6
(73) Patentinhaber: Focke & Co. (GmbH & Co.), 27283 Verden (DE)
(72) Erfinder: Focke, Heinz, D-2810 Verden (DE); Liedtke, Kurt, D-2810 Verden (DE)
(74) Vertreter: Bolte, Erich, Dipl.-Ing.

(56) Entgegenhaltungen:
- EP-A- 291 692
- DE-A- 3 205 801
- DE-A- 3 500 547
- DE-A- 3 716 897
- US-A- 3 658 220

## Beschreibung

Die Erfindung betrifft ein Verfahren zum Herstellen von Packungs-Zuschnitten durch Abreißen von einer Materialbahn mit Perforationen oder dergleichen zur Definition der Zuschnitte und Zuführung derselben zu einem Faltrevolver einer Verpackungsmaschine, wobei die Zuschnitte nacheinander durch Zugkraft von der Materialbahn abgerissen werden. Weiterhin bezieht sich die Erfindung auf eine Vorrichtung zur Durchführung dieses Verfahrens gemäß dem Oberbegriff des Anspruchs 3.

Die prioritätsältere EP-A-0 291 692 befaßt sich mit der Herstellung und Handhabung von Zuschnitten aus dünnem Karton für Zigaretten-Packungen des Typs Klappschachtel. Die verhältnismäßig komplexen Zuschnitte sind mit der Längserstreckung quer zur Längsrichtung der Materialbahn gerichtet und in ausgesuchten Bereichen über Restverbindungen miteinander verbunden. Zur Verarbeitung werden die Zuschnitte nacheinander von der Materialbahn abgerissen und einem Zigaretten-Magazin zugeführt. In diesem wird ein Vorrat an Zuschnitten durch Stapeln gebildet. Zur Herstellung von Verpackungen (Klappschachteln) werden die Zuschnitte einzeln dem Magazin an der Unterseite entnommen.

Ein Verfahren und eine Vorrichtung gemäß dem Oberbegriff des Anspruchs 1 bzw. 3 sind weiterhin aus der DE-A-3 500 547 bekannt.

Die Erfindung befaßt sich mit der Handhabung der Zuschnitte nach dem Abtrennen von einer Materialbahn. Die zu lösende Aufgabe besteht darin, Verfahren und Vorrichtung vorzuschlagen, durch die die durch Abreißen von der Materialbahn hergestellten Zuschnitte in leistungsfähiger Weise dem weiteren Verarbeitungs-, nämlich Verpackungsprozeß zugeführt werden können.

Zur Lösung dieser Aufgabe ist das erfindungsgemäße Verfahren dadurch gekennzeichnet, daß die Zuschnitte nach dem Abtrennen in der Ebene der Materialbahn, jedoch quer zur Förderrichtung derselben, dem Faltrevolver unmittelbar zugeführt werden.

Die Zuschnitte werden demnach längs einer im Grundriß abgewinkelten Förder- und Zuschnittbahn gefördert. In der Zuförderrichtung der Materialbahn erfolgt der Abriß der Zuschnitte von dieser. Danach werden die Zuschnitte in Querrichtung dem Faltrevover übergeben. Dadurch ist die Herstellung und der Weitertransport der Zuschnitte bis zum Faltrevolver mit einfachen Förderorganen möglich.

Besondere Maßnahmen sind getroffen, wennn zur Erhöhung der Leistung gleichzeitig zwei oder mehr Zuschnitte verarbeitet werden. In diesem Falle werden erfindungsgemäß zwei oder mehr Zuschnitte in einem ersten Abreißvorgang von der Materialbahn abgetrennt und als Einheit weitergefördert. Sodann wird diese aus mehreren Zuschnitten bestehende Einheit in die einzelnen Zuschnitte durch Reißen aufgeteilt.

Die Vorrichtung zur Durchführung des Verfahrens ist durch die Merkmale des Anspruchs 3 gekennzeichnet.

In besonderer Weise ist die Vorrichtung für die Vorbereitung von zwei oder mehr gleichzeitig zu verarbeitenden Zuschnitten eingerichtet. In diesem Falle wird erfindungsgemäß durch das erste Paar Zugwalzen eine Einheit von zwei oder mehr Zuschnitten von der Materialbahn abgerissen und einer nachfolgenden Trennstation mit Förderwalzen einerseits und einem zweiten Paar Reißwalzen andererseits, welches mit nochmals höherer Umfangsgeschwingkeit umläuft zum Auseinanderreißen der Einheit in die einzelnen Zuschnitte, zugeführt. Die zweite Trennstation bzw. das zweite Reißwalzenpaar ist dabei vorzugsweise im Bereich der Zuschnittbahn angeordnet, so daß nach dem Trennen der Einheit in die einzelnen Zuschnitte diese unmittelbar anschließend in Querrichtung abgefördert werden können.

In ebenfalls besonderer Weise sind bei der Erfindung die Reißwalzen ausgebildet. Wenigstens eine (obere) Reißwalze ist so gestaltet, daß sie nur während einer vorgegebenen Phase in Eingriff bzw. Berührung mit der Materialbahn bzw. den Zuschnitten gelangt. Während der übrigen Phase einer Umdrehung wird gegenüber der anderen Reißwalze des Reißwalzenpaares ein Spalt gebildet, der den Durchtritt der Materialbahn bzw. der Zuschnitte zwischen den Reißwalzen ohne Ausübung einer Zugkraft ermöglicht. Vorzugsweise ist die betreffende Reißwalze mit einem in Radialrichtung als Erhöhung wirkenden Reißsegment versehen, welches während der Phase der Ausübung der Zug- bzw. Reißkraft mit der Materialbahn bzw. dem Zuschnitt in Berührung kommt.

Weitere Ausgestaltungen der Erfindung beziehen sich auf die Ausgestaltung der Reißaggregate sowie auf die Organe für den Transport der Materialbahn und der (einzelnen) Zuschnitte.

Ein Ausführungsbeispiel der Erfindung wird nachfolgend anhand der Zeichnungen näher erläutert. Es zeigt:
- Fig. 1: eine Verpackungsmaschine im schematischen Grundriß mit Einrichtungen für die Herstellung und Handhabung von Zuschnitten,
- Fig. 2: einen Abschnitt einer Materialbahn für Zuschnitte im Grundriß im Bereich der Herstellung der einzelnen Zuschnitte,
- Fig. 3: den schematischen Ablauf der Herstellung von Zuschnitten durch Abreißen von einer Materialbahn in Seitenansicht,
- Fig. 4: Organe zum Herstellen von einzelnen Zuschnitten durch Abreißen (Trennstation) in Seitenansicht,
- Fig. 5: einen ergänzten Grundriß zu der Trennstation gemäß Fig 4,
- Fig. 6: eine Einzelheit im Bereich der Trennstation in Queransicht zu Fig. 5, in vergrößertem Maßstab.

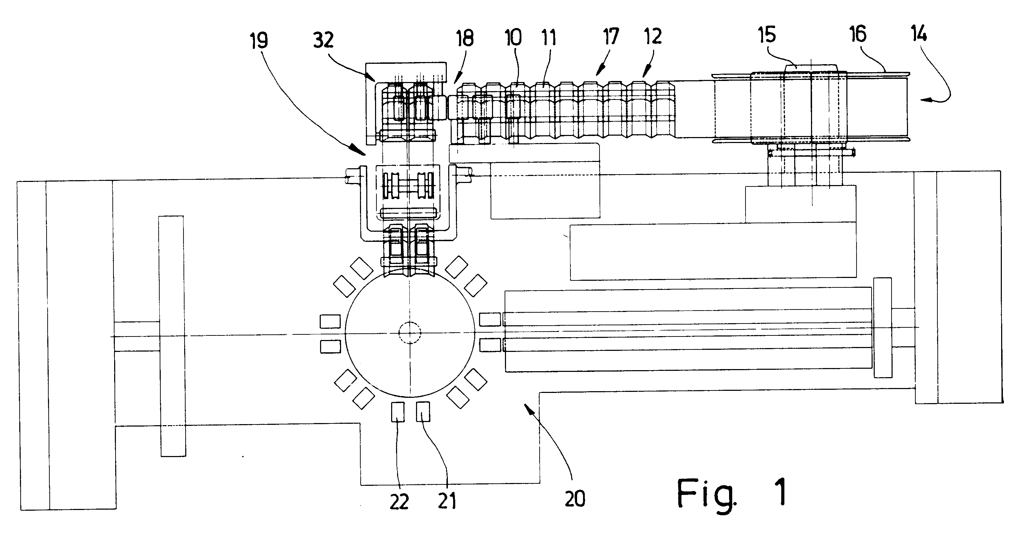

Die in Fig. 1 schematisch dargestellte Verpackungsmaschine dient zur Herstellung von (Zigaretten-)Packungen aus dünnem Karton, und zwar von Klappschachteln (Hinge-Lid-Pakkungen). Die Besonderheit besteht darin, daß Zuschnitte 10, 11 für die Herstellung der Klappschachtel nicht einzeln vorgefertigt der Verpackungsmaschine zugeführt werden, sondern als Materialbahn 12. Diese besteht aus fortlaufend aneinandergereihten, vorgeformten Zuschnitten 10, 11, die lediglich durch Restverbindungen 13 zu der Materialbahn 12 verbunden sind. Die Zuschnitte 10, 11 sind mit ihrer Längserstreckung quer zur Längsrichtung der Materialbahn 12 orientiert. Vorzugsweise sind Zuschnitte 10, 11 und Materialbahn 12 nach Maßgabe der EP-A-0 291 692 ausgebildet.

Die Materialbahn 12 wird als gewickelte Bobine 14 der Verpackungsmaschine zugestellt. Diese ist auf ihrer Rückseite mit einem nach rückwärts gerichteten Tragzapfen 15 versehen, auf den die Bobine 14 mit einer Bobinenrolle 16 aufgesetzt wird. Die Materialbahn 12 wird (fortlaufend) von der Bobine 14 abgezogen. Ein Abschnitt der Materialbahn 12 verläuft längs einer Förderbahn 17 an der Rückseite der Verpackungsmaschine, etwa parallel zu einer (gedachten) Längsmittelebene derselben.

Im Bereich einer Trennstation 18 werden einzelne Zuschnitte 10, 11 von der Materialbahn 12 abgetrennt, und zwar durch Reißen. Die einzelnen Zuschnitte 10, 11 werden sodann längs einer Zuschnittbahn 19 - quer zur Förderbahn 17 - in Richtung zur Vorderseite der Verpackungsmaschine einem Faltrevolver 20 zugeführt. Die Zuschnittbahn 19 endet oberhalb eines Randes des Faltrevolvers 20, nämlich oberhalb von Taschen 21, 22 desselben. In diese werden die Zuschnitte 10, 11 von oben her eingedrückt.

Bei dem vorliegenden Ausführungsbeispiel ist der Faltrevolver 20 mit jeweils zwei parallel nebeneinanderliegenden Taschen 21, 22 ausgerüstet, die gleichzeitig mit je einem Zuschnitt 10, 11 beschickt werden. Die Leistung der Verpackungsmaschine wird dadurch verdoppelt. Demgemäß werden jeweils zwei Zuschnitte 10, 11 von der Materialbahn 12 und voneinander getrennt und parallel längs der Zuschnittbahn 19 dem Faltrevolver 20 zugefördert. Die beiden Zuschnitte 10, 11 werden gleichzeitig in entsprechend angeordnete Taschen 21, 22 eingeführt.

Beim Abtrennen der Zuschnitte 10, 11 von der Materialbahn 12 wird so vorgegangen, daß zunächst eine Einheit 23 aus zwei noch miteinander verbundenen Zuschnitten 10, 11 von der Materialbahn 12 abgetrennt, nämlich abgerissen wird. Die Einheit 23 wird sodann auf Abstand zur Materialbahn 12 gefördert. Danach erfolgt die Trennung der Einheit 23 in die beiden einzelnen Zuschnitte 10, 11.

Das Abreißen der Einheit 23 und das Trennen derselben erfolgt durch Unterschiede in der Fördergeschwindigkeit. Zu diesem Zweck sind im Bereich der Trennstation 18 verschiedenen Paare von Transportwalzen und Reißwalzen in besonderer Weise miteinander kombiniert.

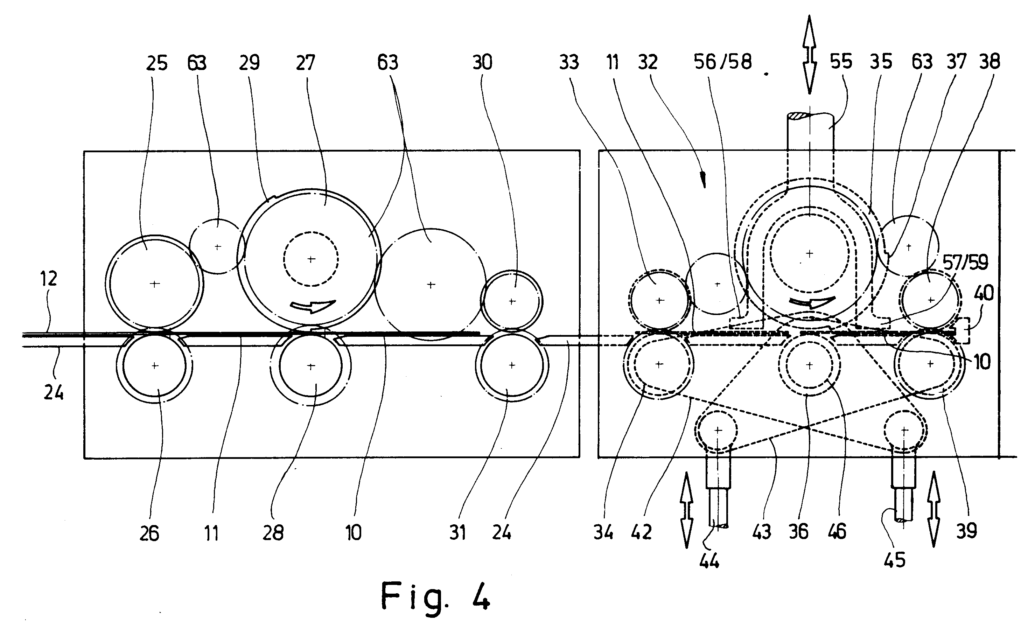

Gemäß Fig. 4 wird die Materialbahn 12 auf einer die Förderbahn 17 bildenden Transportunterlage 24 durch ein erstes Paar von Zugwalzen 25, 26 einem ersten Trennaggregat 66 der Trennstation 18 zugeführt. Die Zugwalzen 25, 26 sind (kontinuierlich) mit einer Geschwindigkeit V_{O} angetrieben.

In einem der Größe der Einheit 23 angepaßten Abstand folgt auf die Zugwalzen 25, 26 ein Paar von Reißwalzen 27, 28. Diese sind so angetrieben, daß die die Materialbahn 12 bzw. die Einheit 23 fördernde Umfangsfläche eine größere Geschwindkeit V₁ aufweist als die Zugwalzen 25, 26. Da die Materialbahn 12 durch die Zugwalzen 25, 26 auf eine Geschwindigkeit V_{O} festgelegt ist, bewirkt die höhere Geschwindigkeit der Reißwalzen 27, 28 beim Erfassen der Materialbahn 12 ein Abreißen eines Zuschnitts 10, 11 bzw. der Einheit 23. Zum Abtrennen einer Einheit 23 aus zwei noch miteinander verbundenen Zuschnitten 10, 11 ist der Abstand zwischen den Zugwalzen 25, 26 und den Reißwalzen 27, 28 derart, daß die Materialbahn 12 durch die Reißwalzen 27, 28 erst im Bereich des in Förderrichtung zweiten Zuschnitts 11 erfaßt wird.

Die Reißwalzen 27, 28 sind in besonderer Weise ausgebildet. Die untere, kleinere Reißwalze 28 dient lediglich als Gegenwalze, auf deren Umfang die Materialbahn 12 bzw. die Einheit 23 ständig aufliegt. Die größere, obere Reißwalze 27 ist längs des Umfangs mit einem Reißsegment 29 ausgebildet. Dieses über die übrige Umfangsfläche der Reißwalze 27 in Radialrichtung vorstehende Reißsegment 29 überträgt die für den Reißvorgang erforderliche Zugkraft auf die Materialbahn 12. Es liegt demnach bei einer Umdrehung der Reißwalze 27 lediglich (zeitweilig) das Reißsegment 29 an der Materialbahn an. Während der übrigen Phase, nämlich außerhalb des Reißsegments 29, wird ein Spalt zwischen den Reißwalzen 27 und 28 gebildet, der den Vorschub der Materialbahn 12 ohne Berührung mit der (oberen) Reißwalze 27 ermöglicht.

Die abgetrennte Einheit 23 wird einem nachfolgenden Paar von Förderwalzen 30, 31 zugeführt. Diese sind in einem solchen Abstand von den Reißwalzen 27, 28 angeordnet, daß die Einheit 23 erst nach dem Abtrennen durch die Reißwalzen 27, 28 erfaßt wird. Die Förderwalzen 30, 31 werden mit derselben Geschwindigkeit V₁ angetrieben wie die Reißwalzen 27, 28. Deren Reißsegment 29 ist so bemessen, daß nach dem Abtrennen der Einheit 23 diese den Förderwalzen 30, 31 zugeführt wird. Danach übernehmen die Förderwalzen 30, 31 den Weitertransport der Einheit 23.

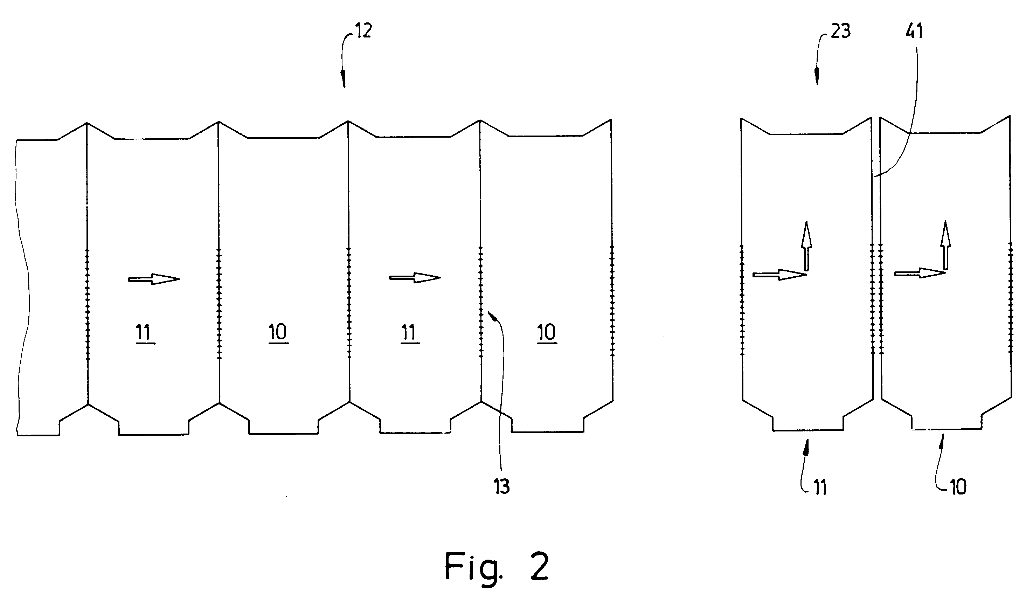

Durch die höhere Fördergeschwindigkeit der Reißwalzen 27, 28 und der Förderwalzen 30, 31 gegenüber den Zugwalzen 25, 26 wird die Einheit 23 nach dem Abtrennen sehr schnell unter Bildung eines Abstands (Fig. 2) zu der Materialbahn 12 gefördert.

Die Einheit 23 gelangt nun in den Bereich eines weiteren Trennaggregats 32 zur Trennung der Einheit 23 in die einzelnen Zuschnitte 10, 11. Das Trennaggregat 32 übernimmt die Einheit durch zwei Förderwalzen 33, 34. Diese führen die Einheit 23 einem Paar von Reißwalzen 35, 36 zu. Während die Förderwalzen 33, 34 mit der Geschwindigkeit V₁ der Förderwalzen 30, 31 angetrieben sind, haben die Reißwalzen 35, 36 eine demgegenüber höhere Geschwindigkeit V₂. Dadurch kommt auch hier die Trennung der Einheit 23 durch Reißen zustande.

Die Reißwalzen 35, 36 sind in gleicher Weise ausgebildet wie die Reißwalzen 27, 28. Die untere Reißwalze 36 ist in ihrer Position unverändert und mit relativ kleinerem Durchmesser ausgebildet. Die demgegenüber größere, obere Reißwalze 35 ist mit einem Reißsegment 37 der beschriebenen Art versehen. Der Antrieb der Reißwalze 35 ist derart, daß die Einheit 23 durch die Förderwalzen 33, 34 zwischen den Reißwalzen 35, 36 hindurchgefördert werden kann. Das Reißsegment 37 erfaßt die Einheit 23 im Bereich des vornliegenden Zuschnitts 10 und trennt diesen von dem anderen Zuschnitt 11 infolge der höheren Geschwindigkeit ab. Der abgetrennte Zuschnitt 10 wird dann von weiteren Förderwalzen 38, 39 bis an einen seitlichen Anschlag 40 gefördert. Der Zuschnitt 10 erhält dadurch einen (geringen) Abstand 41 von dem anderen Zuschnitt 11. Die beiden Zuschnitte 10, 11 befinden sich in der Position für den Transport längs der quergerichteten Zuschnittbahn 19 zu den Taschen 21, 22.

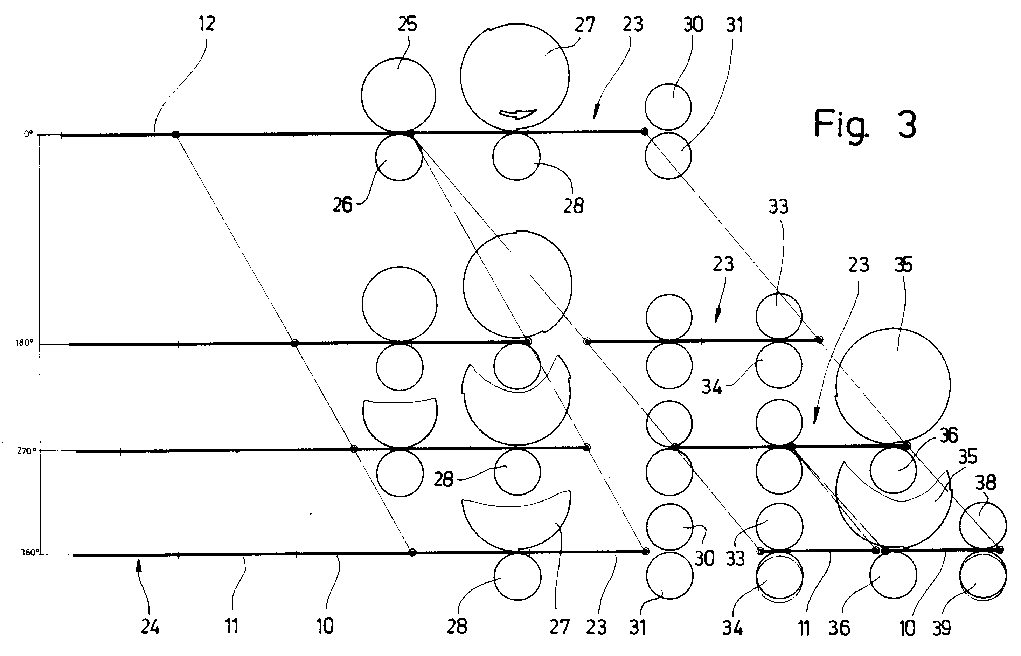

Aus dem Diagramm gemäß Fig. 3 ist der zeitliche Ablauf des geschilderten Verfahrens ersichtlich. Ein Arbeitszyklus von 360° beginnt im Moment des Erfassens der Materialbahn 12 durch das Reißsegment 29 der Reißwalze 27 zum Abtrennen der Einheit 23. Nach 180° (halber Arbeitszyklus) ist die Einheit 23 bereits durch das Trennaggregat 32 erfaßt. Die nachfolgende, zurückbleibende Materialbahn 12 wird in die Position zwischen den Reißwalzen 27, 28 gefördert.

Nach weiteren 90° (drei Viertel Arbeitszyklus) ist die Einheit 23 in den Bereich der Reißwalzen 35, 36 gefördert und wird soeben durch das Reißsegment 37 erfaßt. Nach Beendigung des Arbeitszyklus (360°) befinden sich die beiden voneinander getrennten Zuschnitte 10, 11 in der transportgerechten Position, jeweils durch die seitlichen Förderwalzen 33, 34 bzw. 38, 39 gehalten.

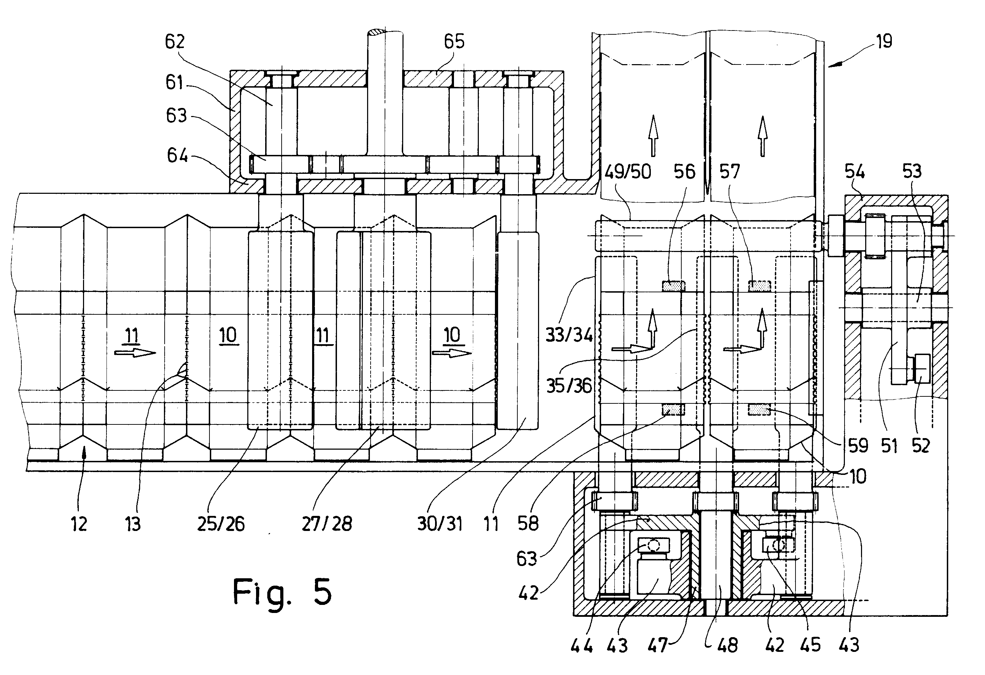

Zum Abtransport der Zuschnitte 10, 11 längs der Zuschnittbahn 19 sind die Förderwalzen 33, 34 sowie 38, 39 auseinander bewegbar. Bei dem dargestellten Ausführungsbeispiel wird zu diesem Zweck jeweils die untere Förderwalze 34 bzw. 39 nach unten bewegt, so daß die Zuschnitte 10, 11 freikommen. Die Förderwalzen 34, 39 sind zu diesem Zweck an Schwenkarmen 42, 43 gelagert, die durch Schubstangen 44, 45 betätigbar sind. Die Schwenkarme 42, 43 sind um ein gemeinsames, mittiges Schwenklager 46 bewegbar, welches konzentrisch zur Drehachse der unteren Reißwalze 36 angeordnet ist. Wie aus Fig. 5 ersichtlich, wird das Schwenklager 46 durch eine Lagerhülse 47 gebildet, die drehbar auf einer Antriebswelle 48 für die Reißwalze 36 gelagert ist.

Der Abtransport der Zuschnitte 10, 11 längs der Zuschnittbahn 19 erfolgt hier durch Abförderwalzen 49, 50. Diese sind queraxial zu den Förderwalzen 33, 34 sowie 38, 39 gerichtet. Die einseitig und auskragend gelagerten Förderwalzen 33, 34 sowie 38, 39 und die Reißwalzen 35, 36 sind in ihrer axialen Länge so bemessen, daß ein der Zuschnittbahn 19 zugekehrter Randbereich der Zuschnitte 10, 11 freibleibt. Hier, nämlich an einem für den Transport im Bereich der Zuschnittbahn 19 vorderen Teil der Zuschnitte 10, 11, kommen die quergerichteten Abförderwalzen 49, 50 zum Einsatz. Die Abförderbewegung setzt ein, sobald die Förderwalzen 33, 34 bzw. 38, 39 von den Zuschnitten 10, 11 abgehoben sind, während sich gleichzeitig das Reißsegment 37 außer Eingriff befindet.

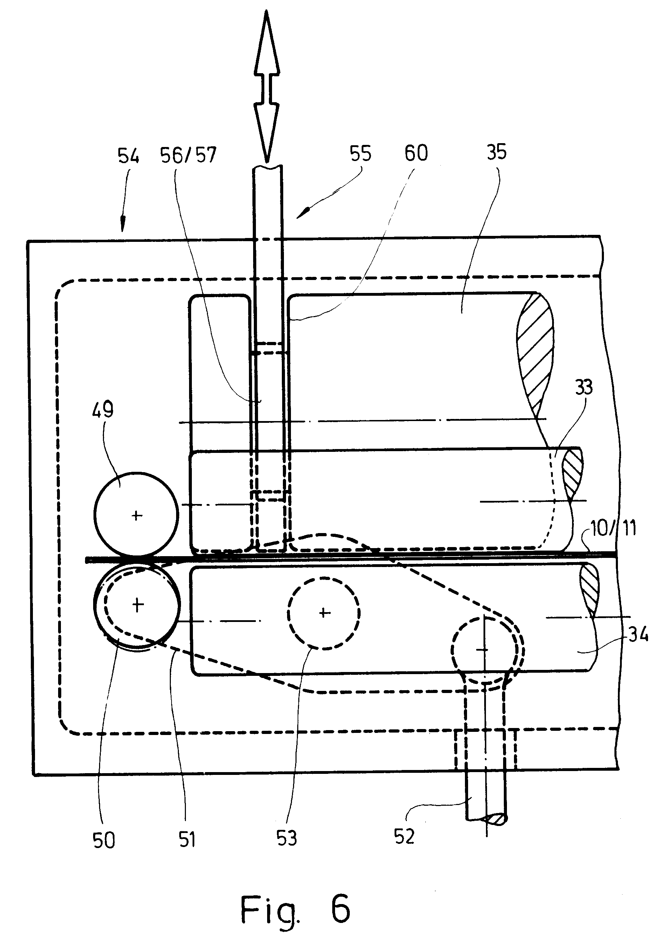

Auch die Abförderwalzen 49, 50 sind so gelagert, daß sie nur für den Abtransport der Zuschnitte 10, 11 an diesen anliegen, während der Phase der Zuförderung derselben aber einen Spalt freilassen. Wie aus Fig. 6 ersichtlich, ist zu diesem Zweck die untere Abförderwalze 50 an einem Schwenkhebel 51 gelagert, der am freien Ende durch eine Schubstange 52 betätigbar ist. Ein Schwenklager 53 für den Schwenkhebel 51 befindet sich außerhalb des Bereichs der Förderbahn 17 und der Zuschnittbahn 19 in einem gesonderten Getriebegehäuse 54.

Zur zusätzlichen Fixierung der Zuschnitte 10, 11 nach deren Trennung im Bereich des Trennaggregats 32 sind zwei Niederhalter 55 vorgesehen, die mit gabelförmigen Stützarmen 56, 57 bzw. 58, 59 auf die Zuschnitte 10, 11 nach der Trennung abgesenkt werden, derart, daß jeder Zuschnitt 10, 11 durch zwei im Abstand voneinander liegende Stützarme 56..59 nach unten gedrückt wird auf die Transportunterlage 24. Die Niederhalter 55 werden wieder angehoben, sobald der Abtransport der Zuschnitte 10, 11 beginnt. Wie aus Fig. 6 ersichtlich, liegen die Stützarme 56..59 zu beiden Seiten der (oberen) Reißwalze 35. Diese ist mit einer ringförmigen Vertiefung 60 jeweils im Bereich der Niederhalter 55 versehen. Diese treten in die Vertiefung 60 ein, ohne daß dadurch die Drehbewegung der Reißwalze 35 beeinträchtigt ist.

Die Zugwalzen 25, 26, die Reißwalzen 27, 28 und die Förderwalzen 30, 31 sind einseitig, frei auskragend gelagert, und zwar in bzw. an einem gemeinsamen Getriebegehäuse 61. Antriebswellen 62 sind durch Zahnräder 63 getrieblich miteinander verbunden. Die freien Enden der Antriebswellen 62 sind in einer vorderen Gehäusewand 64 und einer rückseitigen Gehäusewand 65 drehbar gelagert und damit ausreichend gestützt.

In analoger Weise ist die Anordnung im Bereich der Förderwalzen 33, 34 bzw. 38, 39 und der Reißwalzen 35, 36 gewählt, wobei das Getriebegehäuse 54 winkelförmig ausgebil det ist und sich bis zu den vorgenannten Walzen erstreckt.

## Patentansprüche

1. Verfahren zum Herstellen von Packungs-Zuschnitten (10, 11) durch Abreißen von einer Materialbahn (12) mit Perforationen oder dergleichen zur Definition der Zuschnitte (10, 11) und Zuführung derselben zu einem Faltrevolver (20) einer Verpackungsmaschine, wobei die Zuschnitte (10, 11) nacheinander durch Zugkraft von der Materialbahn (12) abgerissen werden, **dadurch gekennzeichnet, daß** die Zuschnitte (10, 11) nach dem Abtrennen in der Ebene der Materialbahn (12), jedoch quer zur Förderrichtung derselben, dem Faltrevolver (20) unmittelbar zugeführt werden.

2. Verfahren nach Anspruch 1, dadurch gekennzeichnet, daß zum gleichzeitigen Herstellen von mehreren, insbesondere zwei Zuschnitten (10, 11), diese zuerst als Einheit (23) von der Materialbahn (12) abgetrennt und weitergefördert werden und daß sodann die Einheit (23) in die einzelnen Zuschnitte (10, 11) getrennt wird.

3. Vorrichtung zum Herstellen von Packungs-Zuschnitten (10, 11) durch Abreißen von einer Materialbahn (12) mit Perforationen oder dergleichen zur Definition der Zuschnitte (10, 11) und Zuführen derselben zu einem Faltrevolver (20) einer Verpackungsmaschine, wobei die Zuschnitte nacheinander durch Paare von Zugwalzen (25, 26) bzw. Förderwalzen (33, 34) und Reißwalzen (27, 28) bzw. (35, 36) unterschiedlicher Fördergeschwindigkeit von der Materialbahn (12) abreißbar sind, gekennzeichnet durch eine Zuschnittbahn (19), die sich in der Ebene der Materialbahn (12) quer zur Förderrichtung derselben erstreckt und unmittelbar zum Faltrevolver (20) führt und in welche die von der Materialbahn (12) abgetrennten Zuschnitte (10, 11) einförderbar sind.

4. Vorrichtung nach Anspruch 3, dadurch gekennzeichnet, daß zum gleichzeitigen Verarbeiten von zwei oder mehr Zuschnitten (10, 11) durch das erste Paar von Reißwalzen (27, 28) eine Einheit (23) aus zwei oder mehr Zuschnitten (10, 11) von der Materialbahn (12) abtrennbar ist und daß die Einheit (23) im Bereich eines weiteren Trennaggregats (32) in einzelne Zuschnitte (10) teilbar ist.

5. Vorrichtung nach Anspruch 4, dadurch gekennzeichnet, daß die Reißwalzen (27, 28) zum Abtrennen der Einheit (23) die Materialbahn (12) im Bereich des zweiten Zuschnitts (11) der aus zwei Zuschnitten (10, 11) bestehenden Einheit (23) erfaßt.

6. Vorrichtung nach Anspruch 3 sowie einem oder mehreren der weiteren Ansprüche, dadurch gekennzeichnet, daß an das erste Paar von Reißwalzen (27, 28) Förderwalzen (30, 31) zum Weitertransport der abgetrennten Zuschnitte (10, 11) bzw. der Einheiten (23) folgt, wobei die Förderwalzen (30, 31) mit derselben Geschwindigkeit angetrieben sind wie die Reißwalzen (27, 28).

7. Vorrichtung nach Anspruch 4 sowie einem oder mehreren der weiteren Ansprüche, dadurch gekennzeichnet, daß das zweite Trennaggregat (32) eintrittsseitig aus einem Paar Förderwalzen (33, 34) und nachfolgend einem mit höherer Geschwindigkeit angetriebenen Paar Reißwalzen (35, 36) besteht, wobei die Reißwalzen (35, 36) zum Trennen einer Einheit (23) im Bereich des in Förderrichtung vornliegenden Zuschnitts (10) die Einheit (23) erfassen.

8. Vorrichtung nach Anspruch 3 sowie einem oder mehreren der weiteren Ansprüche, dadurch gekennzeichnet, daß die Reißwalzen (27, 28; 35, 36) am Umfang mit einem in Radialrichtung vorstehenden Reißsegment (29, 37) versehen sind, welches die Materialbahn (12) bzw. die Einheit (23) zur Ausübung einer Zugkraft zusammen mit einer Gegenwalze erfassen, wobei außerhalb des Bereichs der Reißsegmente (29, 37) zwischen den Reißwalzen (27, 28; 35, 36) ein Spalt für den Durchtritt der Materialbahn (12) bzw. der Einheit (23) gebildet ist.

9. Vorrichtung nach Anspruch 7 sowie einem oder mehreren der weiteren Ansprüche, dadurch gekennzeichnet, daß von den im zweiten Trennaggregat (32) gebildeten Zuschnitten (10, 11) der in Förderrichtung vornliegende Zuschnitt (10) durch die Reißwalzen (35, 36) gegen einen Anschlag (40) förderbar ist, derart, daß zwischen den beiden Zuschnitten (10, 11) ein für die Weiterverarbeitung, insbesondere für die Förderung innerhalb der Zuschnittbahn (19), erforderlicher Abstand (41) gebildet ist.

10. Vorrichtung nach Anspruch 3 sowie einem oder mehreren der weiteren Ansprüche, dadurch gekennzeichnet, daß die abgetrennten Zuschnitte (10, 11) am Ende der Förderbahn (17) einzeln oder paarweise durch einen Querförderer in die quer zur Förderbahn (17) gerichtete Zuschnittbahn (19) einförderbar sind, insbesondere durch ein Paar von Abförderwalzen (49, 50) mit Achsen quer zu den Achsen der Förderwalzen (33, 34) und Reißwalzen (35, 36).

11. Vorrichtung nach Anspruch 3 sowie einem oder mehreren der weiteren Ansprüche, dadurch gekennzeichnet, daß die Förderwalzen (33, 34) sowie (38, 39) im Bereich des (zweiten) Trennaggregats (32) zum Abfördern der Zuschnitte (10, 11) in die Zuschnittbahn (19) auseinanderbewegbar sind, insbesondere durch Abwärtsbewegen der jeweils unteren Förderwalzen (34, 39).

12. Vorrichtung nach Anspruch 10 sowie einem oder mehre ren der weiteren Ansprüche, dadurch gekennzeichnet, daß die quergerichteten Abförderwlzen (49, 50) den Zuschnitt bzw. die Zuschnitte (10, 11) im Bereich eines freien Vorderteils bezogen auf die Förderrichtung in der Zuschnittbahn (19) erfassen, wobei die Zuschnitte zum Einfördern in das (zweite) Trennaggregat (32) auseinander bewegbar sind.

13. Vorrichtung nach Anspruch 3 sowie einem oder mehreren der weiteren Ansprüche, dadurch gekennzeichnet, daß die Zuschnitte (10, 11) nach dem Abtrennen, insbesondere im Bereich des (zweiten) Trennaggregats (32), also vor dem Eintritt in die Zuschnittbahn (19), in ihrer Position fixiert sind, insbesondere durch wenigstens einen auf- und abbewegbaren Niederhalter (55) mit Stützarmen (56, 57; 58, 59).

## Claims

1. Process for producing pack blanks (10, 11) by tearing off from a web of material (12) with perforations or the like to define the blanks (10, 11) and for feeding them to a folding turret (20) of a packaging machine, the blanks (10, 11) being torn off from the web of material (12) in succession as a result of tensile force, characterised in that the blanks (10, 11), after being severed, are directly fed to the folding turret (20) in the plane of the web of material (12) but transversely relative to the conveying direction of the same.

2. Process according to Claim 1, characterised in that, for the simultaneous production of several, especially two blanks (10, 11), these are first severed as a unit (23) from the web of material (12) and conveyed further, and in that the unit (23) is then divided into the individual blanks (10, 11).

3. Apparatus for producing pack blanks (10, 11) by tearing off from a web of material (12) with perforations or the like to define the blanks (10, 11) and for feeding them to a folding turret (20) of a packaging machine, the blanks being tearable off from the web of material (12) in succession by means of pairs of drawing rollers (25, 26) or conveying rollers (33, 34) and tearing rollers (27, 28) or (35, 36) of differing conveying speed, characterised by a blank track (19) which extends in the plane of the web of material (12) transversely relative to the conveying direction of the latter and leads directly to the folding turret (20) and into which the blanks (10, 11) severed from the web of material (12) can be introduced.

4. Process according to Claim 3, characterised in that, for the simultaneous processing of two or more blanks (10, 11) by the first pair of tearing rollers (27, 28), a unit (23) comprising two or more blanks (10, 11) can be severed from the web of material (12), and in that the unit (23) can be divided into individual blanks (10) in the region of a further severing set (32).

5. Apparatus according to Claim 4, characterised in that the tearing rollers (27, 28) for severing the unit (23) from the web of material (12) grasp the latter in the region of the second blank (11) of the unit (23) consisting of two blanks (10, 11).

6. Apparatus according to Claim 3 and one or more of the further claims, characterised in that the first pair of tearing rollers (27, 28) is followed by conveying rollers (30, 31) for the further transport of the severed blanks (10, 11) or of the units (23), the conveying rollers (30, 31) being driven at the same speed as the tearing rollers (27, 28).

7. Apparatus according to Claim 4 and one or more of the further claims, characterised in that the second severing set (32) consists, on the entry side, of a pair of conveying rollers (33, 34) and thereafter a pair of tearing rollers (35, 36) driven at a higher speed, the tearing rollers (35, 36) grasping a unit (23) in the region of the blank (10) leading in the conveying direction in order to divide the unit (23).

8. Apparatus according to Claim 3 and one or more of the further claims, characterised in that the tearing rollers (27, 28; 35, 36) are equipped, on the circumference, with respective radially projecting tearing segments (29, 37) which grasp the web of material (12) or the unit (23) respectively in order to exert a tensile force together with a mating roller, a gap for the passage of the web of material (12) and of the unit (23) respectively being formed between the tearing rollers (27, 28; 35, 36) outside the region of the tearing segments (29, 37).

9. Apparatus according to Claim 7 or one or more of the further claims, characterised in that, of the blanks (10, 11) formed in the second severing set (32), the blank (10) leading in the conveying direction can be conveyed against a stop (40) by the tearing rollers (35, 36) in such a way that a distance (41) necessary for further processing, especially for conveyance within the blank track (19), is formed between the two blanks (10, 11).

10. Apparatus according to Claim 3 and one or more of the further claims, characterised in that, at the end of the conveying track (17), the severed blanks (10, 11) can be conveyed individually or in pairs by a cross-conveyor into the blank track (19) directed transversely relative to the conveying track (17), especially by a pair of discharge rollers (49, 50) with axes transverse relative to the axes of the conveying rollers (33, 34) and tearing rollers (35, 36).

11. Apparatus according to Claim 3, and one or more of the further claims, characterised in that the conveying rollers (33, 34) and (38, 39) can be moved apart from one another in the region of the (second) severing set (32) for discharging the blanks (10, 11) into the blank track (19), especially as a result of a downward movement of the respective lower conveying rollers (34, 39).

12. Apparatus according to Claim 10 and one or more of the further claims, characterised in that the transversely directed discharge rollers (49, 50) grasp the blank or blanks (10, 11) in the region of a free front part relative to the conveying direction in the blank track (19), the blanks being movable apart from one another for conveyance into the (second) severing set (32).

13. Apparatus according to Claim 3 and one or more of the further claims, characterised in that the blanks (10, 11), after being severed, are fixed in position especially in the region of the (second) severing set (32), that is to say before entering the blank track (19), especially by means of at least one holding-down device (55) movable up and down and having supporting arms (56, 57; 58, 59).

## Revendications

1. Procédé de production de flans de paquets (10,11) par arrachement de ceux-ci d'une bande de matériau (12) pourvue de perforations ou d'évidements semblables pour la délimitation des flans (10, 11) et d'amenée de ceux-ci à un revolver de pliage (20) d'un empaqueteuse, les flans (10, 11) étant arrachés les uns après les autres de la bande de matériau (12) par traction, caractérisé par le fait que les flans (10, 11) sont, après détachement, amenés directement au revolver de pliage (20) dans le plan de la bande de matériau (12), mais perpendiculairement à la direction de transport de celle-ci.

2. Procédé selon la revendication 1, caractérisé par le fait que pour la production simultanée de plusieurs, en particulier deux flans (10, 11), ceux-ci sont d'abord détachés de la bande de matériau (12) et avancés en groupe (23), et que le groupe (23) est ensuite divisé en les flans individuels (10, 11).

3. Dispositif de production de flans de paquets (10, 11) par arrachement de ceux-ci d'une bande de matériau (12) pourvue de perforations ou d'évidements semblables pour la délimitation des flans (10, 11) et d'amenée de ceux-ci à un revolver de pliage (20) d'une empaqueteuse, les flans étant arrachés les uns après les autres de la bande de matériau (12) par des paires de rouleaux tracteurs (25, 26) ou de rouleaux transporteurs (33, 34) et de rouleaux arracheurs (27, 28 ou 35, 36) ayant des vitesses de transport différentes, caractérisé par une voie à flans (19) qui s'étend dans le plan de la bande de matériau (12) perpendiculairement à la direction de transport de celle-ci et va directement au revolver de pliage (20) et dans laquelle les flans (10, 11) détachés de la bande de matériau (12) sont introduits.

4. Dispositif selon la revendication 3, caractérisé par le fait que pour la mise en oeuvre simultanée de deux ou plus de deux flans (10, 11), la première paire de rouleaux arracheurs (27, 28) détache de la bande de matériau (12) un groupe (23) de deux ou plus de deux flans (10, 11), et que ce groupe (23) est divisé en flans individuels (10) dans la zone d'un autre dispositif de séparation (32).

5. Dispositif selon la revendication 4, caractérisé par le fait les rouleaux arracheurs (27, 28), pour le détachement du groupe (23), saisissent la bande de matériau (12) dans la zone du deuxième flan (11) du groupe (23) constitué de deux flans (10, 11).

6. Dispositif selon la revendication 3 et une ou plusieurs des autres revendications, caractérisé par le fait que la première parie de rouleaux arracheurs (27, 28) est suivie de rouleaux transporteurs (30, 31) pour l'avance des flans (10, 11) détachés, ou des groupes (23), ces rouleaux transporteurs (30, 31) étant mus à la même vitesse que les rouleaux arracheurs (27, 28).

7. Dispositif selon la revendication 4 et une ou plusieurs des autres revendications, caractérisé par le fait que le deuxième dispositif de séparation (32) est constitué du côté entrée d'une paire de rouleaux transporteurs (33, 34) et ensuite d'une paire de rouleaux arracheurs (35, 36) mue à plus grande vitesse, ces rouleaux arracheurs (35, 36), pour la division d'un groupe (23), saisissant celui-ci dans la zone du flan (10) situé en avant dans la direction de transport.

8. Dispositif selon la revendication 3 et une ou plusieurs des autres revendications, caractérisé par le fait que les rouleaux arracheurs (27, 28 ; 35, 36) sont pourvues sur leur pourtour d'un segment arracheur saillant radialement (29, 37) qui saisit la bande de matériau (12) ou le groupe (23) pour exercer une traction conjointement avec un contre-rouleau, un interstice pour le passage de la bande de matériau (12) ou du groupe (23) étant formé entre les rouleaux arracheurs (27, 28 ; 35, 36) en dehors de la zone des segments arracheurs (29, 37).

9. Dispositif selon la revendication 7 et une ou plusieurs des autres revendications, caractérisé par le fait que celui (10) des flans (10, 11) formés dans le deuxième dispositif de séparation (32) qui est situé en avant dans la direction de transport est amené par les rouleaux arracheurs (35, 36) contre une butée (40) de façon telle qu'entre les deux flans (10, 11) soit créé un intervalle (41) nécessaire à la suite de la mise en oeuvre, en particulier au transport dans la voie à flans (19).

10. Dispositif selon la revendication 3 et une ou plusieurs des autres revendications, caractérisé par le fait que les flans (10, 11) détachés sont, à l'extrémité de la voie de transport (17), introduits un par un ou deux par deux dans la voie à flans (19) dirigée perpendiculairement à la voie de transport (17) par un transporteur transversal, en particulier par une paire de rouleaux évacuateurs (49, 50) dont les axes sont perpendiculaires aux axes des rouleaux transporteurs (33, 34) et des rouleaux arracheurs (35, 36).

11. Dispositif selon la revendication 3 et une ou plusieurs des autres revendications, caractérisé par le fait que les rouleaux transporteurs (33, 34 et 38, 39) situés dans la zone du (deuxième) dispositif de séparation (32) sont écartés pour l'évacuation des flans (10, 11) dans la voie à flans (19), en particulier par abaissement des rouleaux transporteurs inférieurs (34, 39).

12. Dispositif selon la revendication 10 et une ou plusieurs des autres revendications, caractérisé par le fait que les rouleaux évacuateurs dirigés transversalement (49, 50) saisissent le flan ou les flans (10, 11) dans la zone d'une partie libre avant, relativement à la direction de transport dans la voie à flans (19), les flans étant écartés pour leur introduction dans le (deuxième) dispositif de séparation (32).

13. Dispositif selon la revendication 3 et une ou plusieurs des autres revendications, caractérisé par le fait que les flans (10, 11), après leur détachement, sont, en particulier dans la zone du (deuxième) dispositif de séparation (32), c'est-à-dire avant leur entrée dans la voie à flans (19), fixés dans leur position, en particulier par au moins un élément de serrage pouvant monter et descendre (55), pourvu de bras d'appui (56, 57 ; 58, 59).
